(19) Europäisches Patentamt
European Patent Office
Office européen des brevets

(11) **EP 4 287 314 A1**

(12) **EUROPEAN PATENT APPLICATION**
published in accordance with Art. 153(4) EPC

(43) Date of publication:
**06.12.2023 Bulletin 2023/49**

(21) Application number: **22745732.2**

(22) Date of filing: **21.01.2022**

(51) International Patent Classification (IPC):
**H01M 4/36** (2006.01) **H01M 4/505** (2010.01)
**H01M 4/525** (2010.01)

(52) Cooperative Patent Classification (CPC):
**H01M 4/36; H01M 4/505; H01M 4/525;** Y02E 60/10

(86) International application number:
**PCT/JP2022/002125**

(87) International publication number:
**WO 2022/163511 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013355**

(71) Applicant: **Panasonic Intellectual Property
Management Co., Ltd.
Osaka-shi, Osaka 540-6207 (JP)**

(72) Inventors:
• **MURATA, Akiko
Kadoma-shi, Osaka 571-0057 (JP)**
• **KAWADA, Hiroshi
Kadoma-shi, Osaka 571-0057 (JP)**

(74) Representative: **Novagraaf International SA
Chemin de l'Echo 3
1213 Onex, Geneva (CH)**

(54) **ACTIVE MATERIAL FOR NON-AQUEOUS ELECTROLYTE SECONDARY BATTERY, AND NON-AQUEOUS ELECTROLYTE SECONDARY BATTERY**

(57) Provided is an active material contributing to improving the charge/discharge cycle characteristics of a battery. This active material for a non-aqueous electrolyte secondary battery includes: a core capable of reversible intercalation and deintercalation of Li; and a salt attached to the surface of the core, wherein the salt comprises an oxyfluoride represented by general formula $M1OF_a$ ($2 \leq a \leq 6$, M1 is at least one element selected from the group consisting of Ti, Zr, Si, P, and B).

Figure 1

**Description**

TECHNICAL FIELD

The present disclosure relates to an active material for a non-aqueous electrolyte secondary battery and a non-aqueous electrolyte secondary battery using the active material.

BACKGROUND ART

An active material included in a non-aqueous electrolyte secondary battery may cause a side reaction with an electrolyte to deteriorate a battery capacity due to repeated charge and discharge. Patent Literature 1 discloses, for purposes of improvement of charge-discharge cycle characteristics and the like, a surface-modified lithium-containing composite oxide in which zirconium hydroxide or zirconium oxide and at least one lithium salt selected from the group consisting of $Li_2ZrF_6$, $Li_2TiF_6$, $Li_3PO_4$, $Li_2SO_4$, and $Li_2SO_4 \cdot H_2O$ adhere to a surface of a lithium-containing composite oxide. Patent Literature 1 also discloses, as a method for manufacturing the surface-modified lithium-containing composite oxide, a method of mixing a powder of the lithium-containing composite oxide, a solution including zirconium, and a solution including an ammonium salt to be subjected to a heat treatment.

CITATION LIST

PATENT LITERATURE

PATENT LITERATURE 1: International Publication No. 2014/104234

SUMMARY

TECHNICAL PROBLEM

However, the present inventors have made intensive investigation, and consequently found that some mixing conditions and heat-treating conditions for manufacturing the surface-modified lithium-containing composite oxide fail to inhibit the deterioration in the battery capacity due to repeated charge and discharge.
It is an object of the present disclosure to provide an active material that contributes to the improvement of the charge-discharge cycle characteristics of the battery.

SOLUTION TO PROBLEM

An active material for a non-aqueous electrolyte secondary battery of an aspect of the present disclosure includes: a core that is able to reversibly occlude and release Li; and a salt adhering to a surface of the core, wherein the salt includes an oxyfluoride represented by the general formula $M1OF_a$ ($2 \le a \le 6$ and M1 represents one or more elements selected from the group consisting of Ti, Zr, Si, P, and B).
A non-aqueous electrolyte secondary battery of an aspect of the present disclosure comprises: an electrode including the above active material for a non-aqueous electrolyte secondary battery; a counter electrode to the electrode; and a non-aqueous electrolyte.

ADVANTAGEOUS EFFECT OF INVENTION

According to an aspect of the present disclosure, the deterioration in the battery capacity due to repeated charge and discharge may be inhibited.

BRIEF DESCRIPTION OF DRAWING

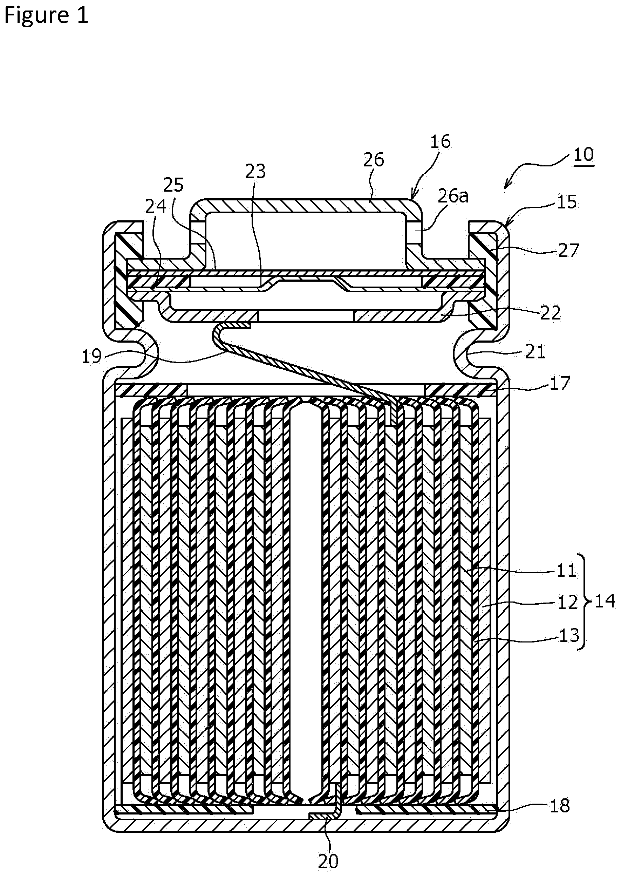

FIG. 1 is a longitudinal sectional view of a cylindrical secondary battery of an example of the embodiment.

DESCRIPTION OF EMBODIMENTS

Adhesion of an oxide and the like to a surface of an active material may inhibit side reactions during charge and discharge of a battery, such as decomposition of an electrolyte and elution of transition metals from a positive electrode active material. However, battery performance varies depending on the compound to adhere to the surface.

2

The present inventors have made intensive investigation, and consequently found that charge-discharge cycle characteristics of a secondary battery may be improved by a salt adhering to the surface of the active material and including an oxyfluoride represented by the general formula $M10F_a$ ($2 \leq a \leq 6$ and M1 represents one or more elements selected from the group consisting of Ti, Zr, Si, P, and B). It is presumed that this salt specifically inhibits the side reactions to protect the active material, leading to maintaining the battery capacity even after repeated charge and discharge.

Hereinafter, an example of the embodiment of the non-aqueous electrolyte secondary battery according to the present disclosure will be described in detail. Hereinafter, a cylindrical battery in which a wound electrode assembly is housed in a cylindrical battery case will be exemplified, but the electrode assembly is not limited to a wound electrode assembly, and may be a stacked electrode assembly in which a plurality of positive electrodes and a plurality of negative electrodes are alternately stacked one by one with a separator interposed therebetween. The battery case is not limited to a cylindrical battery case, and may be, for example, a rectangular battery case or a coin-shaped battery case, or a battery case composed of laminated sheets including a metal layer and a resin layer.

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. As a non-aqueous solvent (organic solvent) of the non-aqueous electrolyte, any of carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the non-aqueous electrolyte, $LiPF_6$, $LiBF_4$, $LiCF_3SO_3$, or the like, or a mixture thereof may be used. An amount of the electrolyte salt to be dissolved in the non-aqueous solvent may be, for example, greater than or equal to 0.5 mol/L and less than or equal to 2.0 mol/L. Hereinafter, for convenience of description, the side of the sealing assembly 16 will be described as the "upper side", and the bottom side of the exterior 15 will be described as the "lower side".

The opening end of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on the end, the negative electrode lead 20 extends through an outside of the insulating plate 18 toward the bottom side of the exterior 15, and is welded to the bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face thereof.

The sealing assembly 16 has the filter 22, a lower vent member 23, an insulating member 24, an upper vent member 25, and the cap 26, which are stacked in this order from the electrode assembly 14 side. Respective members constituting the sealing assembly 16 have, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

Hereinafter, the positive electrode 11, the negative electrode 12, and the separator 13, which constitute the secondary battery 10, will be described. Hereinafter, described is a case where a salt including an oxyfluoride is applied to an active material included in the positive electrode 11 (positive electrode active material) as an example, but the salt including the oxyfluoride may be applied to an active material included in the negative electrode 12 (negative electrode active material), or the salt including the oxyfluoride may be applied to both of the positive electrode active material and the negative electrode active material.

[Positive Electrode]

The positive electrode 11 has, for example, a positive electrode core such as a metal foil and a positive electrode mixture layer formed on the positive electrode core. As the positive electrode core, a foil of a metal stable within a potential range of the positive electrode, such as aluminum, a film in which such a metal is disposed on a surface layer thereof, or the like may be used. The positive electrode mixture layer includes, for example, the positive electrode active material, a binder, a conductive agent, and the like. The positive electrode may be produced by, for example, applying a positive electrode mixture slurry including the positive electrode active material, the binder, the conductive agent, and the like on the positive electrode core and drying the coating to form the positive electrode mixture layer, and then rolling this positive electrode mixture layer.

Examples of the conductive agent included in the positive electrode mixture layer include carbon-based particles such as carbon black (CB), acetylene black (AB), Ketjenblack, and graphite. These materials may be used singly, or in combination of two or more.

Examples of the binder included in the positive electrode mixture layer include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or in combination of two or more.

The positive electrode active material includes, for example, a lithium-containing composite oxide as a core that is able to reversibly occlude and release Li. The lithium-containing composite oxide has a layered structure. The lithium-containing composite oxide may have a layered structure belonging to the space group R-3m, a layered structure belonging to the space group C2/m, or the like, for example. In terms of the higher capacity, the stability of the crystal structure, and the like, the lithium-containing composite oxide preferably has a layered structure belonging to the space group R-3m.

The lithium-containing composite oxide is in the form of, for example, secondary particles formed by aggregation of a plurality of primary particles. A particle diameter of the primary particles constituting the secondary particles is, for example, greater than or equal to 0.05 $\mu$m and less than or equal to 1 $\mu$m. The particle diameter of the primary particles is measured as a diameter of a circumscribed circle in a particle image observed with scanning electron microscopy (SEM).

A median diameter (D50) on a volumetric basis of the secondary particles of the lithium-containing composite oxide is, for example, greater than or equal to 1 $\mu$m and less than or equal to 30 $\mu$m, and preferably greater than or equal to 3 $\mu$m and less than or equal to 20 $\mu$m. The D50 means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The lithium-containing composite oxide may be represented by the general formula $Li_xNi_yM2_{1-y}O_2$ ($0.9 \leq x \leq 1.4$, $0.4 \leq y \leq 1$, and M2 represents at least one element selected from the group consisting of Mn, Co, Al, and Fe). A mole fraction of each element constituting the lithium-containing composite oxide may be measured by, for example, inductively coupled plasma (ICP) atomic emission spectroscopy.

"x", which indicates a proportion of Li in the lithium-containing composite oxide, preferably satisfies $0.9 \leq x \leq 1.4$, and more preferably satisfies $1.1 \leq x \leq 1.4$. If $x < 0.9$, the battery capacity may be deteriorated compared with the case where "x" satisfies the above range. If $x > 1.4$, the charge-discharge cycle characteristics may be deteriorated compared with the case where "x" satisfies the above range.

"y", which indicates a proportion of Ni relative to a total number of moles of metal elements excluding Li in the lithium-containing composite oxide, preferably satisfies $0.4 \leq y \leq 1$, and more preferably satisfies $0.7 \leq y \leq 0.95$.

M2 (M2 represents at least one element selected from the group consisting of Mn, Co, Al, and Fe) relative to the total number of moles of the metal elements excluding Li in the lithium-containing composite oxide is an optional component. "1-y", which indicates a proportion thereof, satisfies $0 \leq 1-y \leq 0.6$.

To a surface of the lithium-containing composite oxide being the core, a salt including an oxyfluoride represented by the general formula $M1OF_a$ ($2 \leq a \leq 6$ and M1 represents one or more elements selected from the group consisting of Ti, Zr, Si, P, and B) adheres. This may improve the charge-discharge cycle characteristics of the secondary battery 10.

The surface of the lithium-containing composite oxide being the core refers to surfaces of the secondary particles of the lithium-containing composite oxide. This salt may adhere to an inside of the secondary particles of the lithium-containing composite oxide, that is, surfaces of the primary particles. The salt also adhering to the surfaces of the primary particles may further improve the charge-discharge cycle characteristics of the secondary battery 10. The salt may be present in dots so as to cover at least a partial surface of the lithium-containing composite oxide, or may be present so as to cover the entire surface of the lithium-containing composite oxide. A particle diameter of the salt is, for example, greater than or equal to 0.1 $\mu$m and less than or equal to 2 $\mu$m. The particle diameter of the salt is measured as a diameter of a circumscribed circle in a particle image observed with SEM. Specifically, outer shapes of randomly selected 20 particles are specified, and a major diameter (the longest diameter) of each of the 20 particles is determined to specify an average value thereof as the particle diameter of the salt.

In the oxyfluoride represented by the general formula $M1OF_a$ ($2 \leq a \leq 6$ and M1 represents one or more elements selected from the group consisting of Ti, Zr, Si, P, and B), M1 may represent Ti or Zr. Ti or Zr is preferable because a fluoride complex is stably formed.

The oxyfluoride represented by the general formula $M1OF_a$ ($2 \leq a \leq 6$ and M1 represents one or more elements selected from the group consisting of Ti, Zr, Si, P, and B) has a valency of, for example, greater than or equal to -7 and less than or equal to 0. The salt including the oxyfluoride may include, for example, a cation in addition to the oxyfluoride. Examples of the cation include an ammonium ion ($NH_4^+$), a potassium ion ($K^+$), a sodium ion ($Na^+$), and a calcium ion ($Ca^{2+}$).

The salt may be represented by $(NH_4)_2M1OF_4$ (M1 represents at least one element selected from the group consisting of Ti, Zr, Si, and B).

The adhesion amount of the salt relative to the lithium-containing composite oxide is preferably greater than or equal to 0.01 mol% and less than or equal to 1 mol%, and more preferably greater than or equal to 0.05 mol% and less than or equal to 0.5 mol%. The presence of the salt on the surface of the lithium-containing composite oxide may be confirmed by an X-ray diffraction method (XRD). The adhesion amount of the salt relative to the lithium-containing composite oxide may also be measured by XRD.

Next, an example of the method for manufacturing the positive electrode active material according to the present disclosure will be described. Hereinafter, for convenience of description, a positive electrode active material in which the salt including the oxyfluoride represented by the general formula $M1OF_a$ ($2 \leq a \leq 6$ and M1 represents one or more elements selected from the group consisting of Ti, Zr, Si, P, and B) adheres to the surface of the lithium-containing composite oxide will be referred to as "composite oxide (Y)". In the present disclosure, the positive electrode active material included in the secondary battery 10 includes the composite oxide (Y) as a main component, and may be composed of substantially only the composite oxide (Y). The positive electrode active material may include a composite oxide other than the composite oxide (Y) or another compound within a range which does not impair the object of the present disclosure.

The lithium-containing composite oxide being the core may be synthesized by, for example, adding and mixing a Li source into a composite compound (X) containing no Li, and calcining the mixture at greater than or equal to 200°C and less than or equal to 1050°C. Examples of the composite compound (X) include a composite oxide, a hydroxide, a carbonate compound, and the like containing Ni, Mn, and the like. Examples of the Li source include LiOH. The lithium-containing composite oxide is washed with water by a known method under a known condition, and an amount of LiOH remaining on the surface of the lithium-containing composite oxide after the washing with water varies depending on the condition of the washing with water. The lithium-containing composite oxide washed with water was dried to be a powder. The calcining condition and the like may regulate the median diameter (D50) of the lithium-containing composite oxide.

Then, a salt including a fluoride represented by the general formula $M1F_w$ ($4 \leq w \leq 8$ and M1 represents one or more elements selected from the group consisting of Ti, Zr, Si, P, and B) is added and dry-mixed into the powder of the lithium-containing composite oxide. This allows a reaction between LiOH on the surface of the lithium-containing composite oxide and the fluoride to generate the salt including the oxyfluoride, which yields the composite oxide (Y). Examples of the salt including the fluoride include $(NH_4)_2TiF_6$, $(NH_4)_2ZrF_6$, $(NH_4)_2SiF_6$, $NH_4BF_4$, and $NH_4PF_4$. A particle diameter of the salt including the fluoride is, for example, greater than or equal to 0.1 μm and less than or equal to 2 μm. The particle diameter of the salt including the fluoride is measured as a diameter of a circumscribed circle in a particle image observed with SEM. Specifically, outer shapes of randomly selected 20 particles are specified, and a major diameter (the longest diameter) of each of the 20 particles is determined to specify an average value thereof as the particle diameter of the salt including the fluoride.

An amount of the salt to be added relative to the lithium-containing composite oxide is preferably greater than or equal to 0.01 mol% and less than or equal to 1 mol%, and more preferably greater than or equal to 0.05 mol% and less than or equal to 0.5 mol%. This range allows the salt including the oxyfluoride to adhere to the surface of the lithium-containing composite oxide at an appropriate amount, and thereby the side reactions on the surface of the lithium-containing composite oxide may be inhibited. For the dry-mixing, a mechano-fusion method may be used, or the lithium-containing composite oxide and the salt including the fluoride may be placed into a mortar and mixed under compression with a pestle, for example. The dry-mixing may be performed at a room temperature for greater than or equal to 3 minutes and less than or equal to 30 minutes, for example.

[Negative Electrode]

The negative electrode 12 has, for example, a negative electrode core such as a metal foil and a negative electrode mixture layer provided on a surface of the negative electrode core. As the negative electrode core, a foil of a metal stable within a potential range of the negative electrode, such as copper, a film in which such a metal is disposed on a surface layer thereof, or the like may be used. The negative electrode mixture layer includes, for example, the negative electrode active material and a binder. The negative electrode may be produced by, for example, applying a negative electrode mixture slurry including the negative electrode active material, the binder, and the like on the negative electrode core and drying the coating to form the negative electrode mixture layer, and then rolling this negative electrode mixture layer.

The negative electrode mixture layer includes, for example, a carbon-based active material that reversibly occludes and releases lithium ions as the negative electrode active material. A preferable carbon-based active material is a graphite such as: a natural graphite such as flake graphite, massive graphite, and amorphous graphite; and an artificial graphite such as massive artificial graphite (MAG) and graphitized mesophase-carbon microbead (MCMB). As the negative electrode active material, a Si-based active material constituted of at least one of Si and a Si-containing compound may be used, or the carbon-based active material and the Si-based active material may be used in combination.

As the binder included in the negative electrode mixture layer, a fluororesin, PAN, a polyimide, an acrylic resin, a polyolefin, or the like may be used as in the case of the positive electrode, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among them, CMC or a salt thereof, or PAA or a salt thereof are preferably used in combination with SBR.

[Separator]

For the separator, a porous sheet having an ion permeation property and an insulation property is used. Specific examples of the porous sheet include a fine porous thin film, a woven fabric, and a nonwoven fabric. As a material for the separator, a polyolefin such as polyethylene or polypropylene, cellulose, or the like is preferable. The separator may have any of a single-layered structure and a multi-layered structure. On a surface of the separator, a heat-resistant layer or the like may be formed.

EXAMPLES

Hereinafter, the present disclosure will be further described with Examples, but the present disclosure is not limited to these Examples.

<Example 1>

[Synthesis of Positive Electrode Active Material]

$(NH_4)_2TiF_6$ was added at a proportion of 0.12 mol% into a lithium-containing composite oxide having a median diameter (D50) of 17 $\mu$m and a composition of $LiNi_{0.8}Mn_{0.2}O_2$, and this mixture was added into a mortar and mixed under compression with a pestle. This dry-mixing was performed at a room temperature for 15 minutes. This yielded a positive electrode active material in which $(NH_4)_2TiOF_4$ adhered to a surface of the lithium-containing composite oxide represented by $LiNi_{0.8}Mn_{0.2}O_2$. $(NH_4)_2TiOF_4$ adhering to the surface of the lithium-containing composite oxide and an amount thereof being 0.12 mol%, which was the same as the addition amount, were confirmed by XRD.

[Production of Positive Electrode]

The above positive electrode active material, acetylene black, and polyvinylidene fluoride (PVdF) were mixed at a solid content mass ratio of 96.3:2.5:1.2, an appropriate amount of N-methyl-2-pyrrolidone (NMP) was added, and then this mixture was kneaded to prepare a positive electrode mixture slurry. This positive electrode mixture slurry was applied on both surfaces of a positive electrode core made of aluminum foil, the coating was dried, then the coating was rolled by using a roller, and the resultant was cut to a predetermined electrode size to obtain a positive electrode in which positive electrode mixture layers were formed on both the surfaces of the positive electrode core.

[Preparation of Non-Aqueous Electrolyte]

Fluoroethylene carbonate (FEC), ethylene carbonate (EC), and ethyl methyl carbonate (EMC) were mixed at a volume ratio of 1:1:6 to obtain a non-aqueous solvent. Into this non-aqueous solvent, $LiPF_6$ was dissolved at a concentration of 1.0 mol/L to obtain a non-aqueous electrolyte.

[Production of Test Cell]

A lead wire was attached to each of the above positive electrode and a counter electrode made of Li metal, and the positive electrode and the counter electrode were oppositely disposed with a separator made of a polyolefin interposed therebetween to produce an electrode assembly. This electrode assembly and the above non-aqueous electrolyte were enclosed in an exterior composed of an aluminum laminated film to produce a test cell.

[Evaluation of Charge Capacity, Discharge Capacity, and Charge-Discharge Efficiency]

Under a temperature environment at 25°C, the test cell was charged at a constant current of 0.2 C until a cell voltage reached 4.5 V, and charged at a constant voltage of 4.5 V until a current value reached 0.02 C. Thereafter, the test cell was discharged at a constant current of 0.2 C until the cell voltage reached 2.5 V. A charge capacity and a discharge capacity at the time were measured. The discharge capacity was divided by the charge capacity to calculate a charge-discharge efficiency.

[Evaluation of Capacity Retention]

Under a temperature environment at 25°C, the test cell was charged at a constant current of 0.2 C until a battery voltage reached 4.5 V, and charged at a constant voltage of 4.5 V until a current value reached 0.02 C. Thereafter, the test cell was discharged at a constant current of 0.2 C until the battery voltage reached 2.5 V. This charge-discharge cycle was repeated with 50 cycles. A discharge capacity at the 1st cycle and a discharge capacity at the 50 cycle were determined to calculate a capacity retention by the following formula.

$$\text{Capacity Retention (\%)} = (\text{Discharge Capacity at 50 Cycle / Discharge Capacity at}$$

$$\text{1st Cycle}) \times 100$$

<Example 2>

A test cell was produced and evaluated in the same manner as in Example 1 except that, in the synthesis of the positive electrode active material, the amount of the added $(NH_4)_2TiF_6$ was changed to 0.25 mol%.

<Example 3>

A test cell was produced and evaluated in the same manner as in Example 1 except that, in the synthesis of the positive electrode active material: the D50 of the lithium-containing composite oxide was 5 $\mu$m; and the amount of the added $(NH_4)_2TiF_6$ was changed to 0.05 mol%.

<Example 4>

A test cell was produced and evaluated in the same manner as in Example 1 except that, in the synthesis of the positive electrode active material: the D50 of the lithium-containing composite oxide was 5 $\mu$m; and the amount of the added $(NH_4)_2TiF_6$ was changed to 0.25 mol%.

<Example 5>

A test cell was produced and evaluated in the same manner as in Example 1 except that, in the synthesis of the positive electrode active material: the D50 of the lithium-containing composite oxide was 5 $\mu$m; and the amount of the added $(NH_4)_2TiF_6$ was changed to 0.34 mol%.

<Example 6>

A test cell was produced and evaluated in the same manner as in Example 1 except that, in the synthesis of the positive electrode active material: the D50 of the lithium-containing composite oxide was 5 $\mu$m; and $(NH_4)_2ZrF_6$ instead of $(NH_4)_2TiF_6$ was added at a proportion of 0.12 mol% relative to the lithium-containing composite oxide.

<Example 7>

A test cell was produced and evaluated in the same manner as in Example 1 except that, in the synthesis of the positive electrode active material: the D50 of the lithium-containing composite oxide was 5 $\mu$m; and $(NH_4)_2ZrF_6$

instead of $(NH_4)_2TiF_6$ was added at a proportion of 0.25 mol% relative to the lithium-containing composite oxide.

<Comparative Example 1>

A test cell was produced and evaluated in the same manner as in Example 1 except that, in the synthesis of the positive electrode active material, $(NH_4)_2TiF_6$ was not added to use the lithium-containing composite oxide itself as the positive electrode active material.

<Comparative Example 2>

A test cell was produced and evaluated in the same manner as in Example 1 except that, in the synthesis of the positive electrode active material: the D50 of the of the lithium-containing composite oxide was 5 $\mu$m; and $(NH_4)_2TiF_6$ was not added to use the lithium-containing composite oxide itself as the positive electrode active material.

<Comparative Example 3>

A test cell was produced and evaluated in the same manner as in Example 1 except that, in the synthesis of the positive electrode active material, $Li_2TiF_6$ instead of $(NH_4)_2TiF_6$ was added at a proportion of 0.12 mol% relative to the lithium-containing composite oxide.

Table 1 summarizes the results of the charge capacity, discharge capacity, charge-discharge efficiency, and capacity retention of the test cells of Examples and Comparative Examples. Table 1 also shows the median diameter (D50) of the lithium-containing composite oxide, the composition and addition amount of the additive, and the presence/absence of the oxyfluoride on the surface of the lithium-containing composite oxide.

[Table 1]

| | D50 of active material [μm] | Composition and amount of additive | Presence/ absence of oxyfluoride | Charge capacity [mAh/g] | Discharge capacity [mAh/g] | Charge-discharge efficiency [%] | Capacity retention [%] |
|---|---|---|---|---|---|---|---|
| Example 1 | 17 | $(NH_4)_2TiF_6$ 0.12 mol% | Presence | 242.8 | 207.5 | 85.5 | 96.3 |
| Example 2 | 17 | $(NH_4)_2TiF_6$ 0.25 mol% | Presence | 236.3 | 203.3 | 86.0 | 95.1 |
| Example 3 | 5 | $(NH_4)_2TiF_6$ 0.05 mol% | Presence | 235.7 | 202.6 | 86.0 | 94.8 |
| Example 4 | 5 | $(NH_4)_2TiF_6$ 0.25 mol% | Presence | 233.1 | 199.1 | 85.4 | 96.2 |
| Example 5 | 5 | $(NH_4)_2TiF_6$ 0.34 mol% | Presence | 229.1 | 198.1 | 86.5 | 95.3 |
| Example 6 | 5 | $(NH_4)_2ZrF_6$ 0.12 mol% | Presence | 234.6 | 201.3 | 85.8 | 95.0 |
| Example 7 | 5 | $(NH_4)_2ZrF_6$ 0.25 mol% | Presence | 234.0 | 201.3 | 86.0 | 95.5 |
| Comparative Example 1 | 17 | No addition | Absence | 237.3 | 204.0 | 86.0 | 94.6 |
| Comparative Example 2 | 5 | No addition | Absence | 235.3 | 201.5 | 85.6 | 94.6 |
| Comparative Example 3 | 17 | $Li_2TiF_6$ 0.12 mol% | Absence | 239.7 | 208.9 | 87.2 | 93.7 |

The test cells of Examples all had higher capacity retentions than the test cells of Comparative Examples. The test cells of Examples also exhibited comparable performance of the charge capacity, discharge capacity, and charge-discharge efficiency to those of Comparative Examples. In Comparative Example 3, $Li_2TiF_6$ does not react with LiOH on the surface of the lithium-containing composite oxide and is present on the surface of the lithium-containing composite oxide.

REFERENCE SIGNS LIST

10 secondary battery, 11 positive electrode, 12 negative electrode, 12a winding end, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket

**Claims**

1. An active material for a non-aqueous electrolyte secondary battery, including:

   a core that is able to reversibly occlude and release Li; and
   a salt adhering to a surface of the core, wherein
   the salt includes an oxyfluoride represented by the general formula $M1OF_a$ ($2 \leq a \leq 6$ and M1 represents one or more elements selected from the group consisting of Ti, Zr, Si, P, and B).

2. The active material for a non-aqueous electrolyte secondary battery according to claim 1, wherein the salt is $(NH_4)_2M1OF_4$.

3. The active material for a non-aqueous electrolyte secondary battery according to claim 1 or 2, wherein the M1 represents Ti or Zr.

4. The active material for a non-aqueous electrolyte secondary battery according to any one of claims 1 to 3, wherein the core is a lithium-containing composite oxide having a layered structure and represented by the general formula $Li_xNi_yM2_{1-y}O_2$ ($0.9 \leq x \leq 1.4$, $0.4 \leq y \leq 1$, and M2 represents at least one element selected from the group consisting of Mn, Co, Al, and Fe).

5. A non-aqueous electrolyte secondary battery, comprising:

   an electrode including the active material for a non-aqueous electrolyte secondary battery according to any one of claims 1 to 4;
   a counter electrode to the electrode; and
   an electrolyte.

Figure 1

## INTERNATIONAL SEARCH REPORT

| International application No. |
|---|
| **PCT/JP2022/002125** |

### A. CLASSIFICATION OF SUBJECT MATTER

*H01M 4/36*(2006.01)i; *H01M 4/505*(2010.01)i; *H01M 4/525*(2010.01)i
FI:   H01M4/525; H01M4/36 C; H01M4/505

According to International Patent Classification (IPC) or to both national classification and IPC

### B. FIELDS SEARCHED

Minimum documentation searched (classification system followed by classification symbols)

H01M4/36; H01M4/505; H01M4/525

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0057571 A (KOREA ELECTROTECHNOLOGY RESEARCH INSTITUTE) 29 May 2019 (2019-05-29)<br>    paragraphs [0003], [0011]-[0018], [0069] | 1, 3, 5 |
| Y | | 4 |
| A | | 2 |
| Y | JP 2018-116930 A (PANASONIC INTELLECTUAL PROPERTY MANAGEMENT CO., LTD.) 26 July 2018 (2018-07-26)<br>    paragraphs [0004], [0005], [0202]-[0229], [0247], table 1 | 4 |
| A | | 1-3, 5 |
| Y | JP 2014-528891 A (TIAX LLC) 30 October 2014 (2014-10-30)<br>    claims 9, 11, paragraphs [0004], [0039], [0045], [0054] | 4 |
| A | | 1-3, 5 |
| X | CN 110828784 A (BYD CO., LTD.) 21 February 2020 (2020-02-21)<br>    paragraphs [0021], [0022], [0079]-[0089] | 1, 3-5 |
| A | | 2 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/002125**

| Patent document cited in search report | | | Publication date (day/month/year) | Patent family member(s) | Publication date (day/month/year) |
|---|---|---|---|---|---|
| KR | 10-2019-0057571 | A | 29 May 2019 | (Family: none) | |
| JP | 2018-116930 | A | 26 July 2018 | US 2018/0205073 A1 paragraphs [0003], [0012], [0203]-[0235], [0248], table 1 CN 108336328 A | |
| JP | 2014-528891 | A | 30 October 2014 | US 2014/0197357 A1 claims, paragraphs [0006], [0053], [0059], [0068] WO 2013/025328 A2 EP 2744754 A1 CN 103702942 A KR 10-2014-0047657 A | |
| CN | 110828784 | A | 21 February 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014104234 A